(19) Europäisches Patentamt
European Patent Office
Office européen des brevets

(11) Numéro de publication: **0 363 243 B1**

# (12) FASCICULE DE BREVET EUROPEEN

(45) Date de publication de fascicule du brevet: **29.12.93**

(51) Int. Cl.[5]: **G05D 1/08**, G01C 21/24

(21) Numéro de dépôt: **89402567.5**

(22) Date de dépôt: **19.09.89**

(54) **Procédé et système de contrôle autonome d'orbite d'un satellite géostationnaire.**

(30) Priorité: **06.10.88 FR 8813121**

(43) Date de publication de la demande:
**11.04.90 Bulletin 90/15**

(45) Mention de la délivrance du brevet:
**29.12.93 Bulletin 93/52**

(84) Etats contractants désignés:
**DE ES GB IT NL SE**

(56) Documents cités:
**EP-A- 0 174 715**
**EP-A- 0 209 429**
**EP-A- 0 251 808**
**EP-A- 0 267 086**
**DE-A- 3 417 661**

(73) Titulaire: **AEROSPATIALE Société Nationale Industrielle**
**37, Boulevard de Montmorency**
**F-75781 Paris Cédex 16(FR)**

(72) Inventeur: **Maute, Patrick Aimé Alexandre**
**10 chemin de Cambarnier Nord**
**F-06560 Valbonne(FR)**

(74) Mandataire: **Rinuy, Santarelli**
**14, avenue de la Grande Armée**
**F-75017 Paris (FR)**

**EP 0 363 243 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention concerne le contrôle d'orbite de véhicules spatiaux tels que des satellites et vise plus particulièrement le cas de véhicules spatiaux en orbite géostationnaire (on parle couramment dans ce cas de "maintien à poste", en tant que synonyme de "contrôle d'orbite géostationnaire").

La connaissance de la position et de la vitesse d'un satellite en orbite peut se déduire de la connaissance d'un vecteur d'état E formé de six paramètres orbitaux qui sont par exemple :

- le demi-grand axe de l'orbite, couramment désigné par a ;
- le vecteur excentricité défini, dans le plan de l'orbite, par ses coordonnées :

  . $e_x = e.\cos \omega$
  . $e_y = e.\sin \omega$

  où e est l'excentricité de l'orbite (paramètre sans dimension) et $\omega$ est l'argument du périgée ;
- le vecteur d'inclinaison de l'orbite défini par ses coordonnées :

  . $i_x = i.\cos\Omega$
  . $i_y = i.\sin\Omega$

  où i est l'inclinaison (en degrés), c'est-à-dire l'angle du plan de l'orbite par rapport à l'équateur terrestre, et $\Omega$ est l'ascension droite du noeud ascendant (cela désigne l'orientation de la ligne des noeuds par rapport à un repère inertiel quelconque prédéterminé) ;
- la longitude moyenne $l_m$ .

Si le satellite n'était soumis qu'au champ de gravité d'une terre homogène et parfaitement sphérique, les paramètres orbitaux du vecteur d'état E resteraient constants ($a = 42.164$ km, $e_x = e_y = 0$ et $i_x = i_y = 0$, $l_m$ = longitude de stationnement - ou de consigne-) et le satellite resterait rigoureusement géostationnaire.

Cependant, en raison de perturbations liées notamment à la non-sphéricité de la Terre et l'inhomogénéité du potentiel terrestre, l'attraction de corps célestes comme le Soleil et la Lune et les forces de pression solaire, les paramètres orbitaux dérivent lentement.

Or, la mission d'un satellite géostationnaire exige en pratique son maintien dans une fenêtre étroite en longitude et en latitude (de largeur typiquement comprise entre 0,05 degré et 0,1 degré). Cela exige des manoeuvres de correction (ou "manoeuvres de maintien à poste") qui sont actuellement calculées, et télécommandées au satellite, par un ou plusieurs centre(s) de contrôle au sol, à partir de mesures effectuées par des antennes au sol.

Le maintien à poste nécessite donc actuellement une infrastructure au sol, avec une mobilisation permanente de son personnel (24h par jour, et 365 jours par an) ce qui induit pour le satellite des coûts d'exploitation importants. A cela s'ajoutent d'éventuelles difficultés quant à la possibilité de disposer au sol d'un emplacement approprié pour la construction d'un tel centre de contrôle, et à l'obligation d'en assurer la sécurité.

L'invention a pour objet de permettre de calculer, à bord même du satellite et de façon autonome, les paramètres d'orbite et les manoeuvres de maintien à poste à effectuer, de façon à pouvoir se passer d'une assistance au sol permanente, et de ne plus faire intervenir un tel centre de contrôle au sol que de façon occasionnelle. En fait des paramètres d'orbite peuvent être utilisés en outre dans le contrôle d'attitude (voir par exemple le document EP-A-0 174 715).

L'invention propose à cet effet un procédé pour le maintien à poste d'un satellite en orbite géostationnaire, caractérisé en ce que :

- on détermine au même instant l'angle $\alpha_1$ entre la direction Satellite-Soleil et la direction Satellite-Terre, et l'angle $\alpha_2$ entre la direction Satellite-Etoile Polaire et la direction Satellite-Terre,
- on en déduit le vecteur d'état E formé des paramètres orbitaux par la formule :

  $$Z = H.E + C.B$$

  où :
  . Z est un vecteur de mesure dont les composantes sont déduites des angles $\alpha_1$ et $\alpha_2$
  . H est une matrice de mesure

. C est une matrice de sensibilité aux biais de forme

$$\begin{pmatrix} X_S & Y_S & 0 \\ 0 & 0 & Y_p \end{pmatrix}$$

où $X_S$ est un terme de période sensiblement égale à la journée, $Y_S$ est une terme de période sensiblement égale à l'année et $Y_p$ est un terme caractéristique du mouvement de l'Etoile Polaire,

. B est un vecteur biais déterminé préalablement par comparaison entre le vecteur Z mesuré et des mesures faites au sol,

on détermine en conséquence et on applique par des tuyères des manoeuvres de maintien à poste.

Ainsi, selon l'invention, on choisit de caractériser la position du satellite dans l'espace par les angles que font, vus du satellite, le soleil et l'Etoile Polaire par rapport à la Terre.

De manière préférée on détermine les angles $\alpha_1$ et $\alpha_2$ à partir de mesures effectuées par au moins un détecteur terrestre, une pluralité de détecteurs solaires et un détecteur stellaire orienté vers le Nord selon l'axe Sud-Nord du satellite, les mesures de ces détecteurs étant filtrées séparément en sorte d'obtenir pour ces mesures un retard global (retard intrinsèque du détecteur + retard de filtrage) identique.

L'invention propose également un système de maintien à poste comportant :

- au moins un détecteur terrestre muni d'un filtre adapté à générer un retard tel que le retard global (retard propre du détecteur + retard du filtre) ait une valeur prédéterminée,
- une pluralité de détecteurs solaires munie d'un filtre adapté à générer un retard tel que le retard global soit égal à ladite valeur prédéterminée,
- au moins un détecteur stellaire orienté vers le Nord selon l'axe Sud-Nord du satellite muni d'un filtre adapté à générer un retard tel que le retard global soit égal à ladite valeur prédéterminée,
- un élément de calcul de position connecté à ces filtres et adapté à déduire des mesures filtrées desdits détecteurs l'angle $\alpha_1$ entre les directions (Satellite-Soleil) et (Satellite-Terre) et l'angle $\alpha_2$ entre les directions (Satellite-Etoile Polaire) et (Satellite-Terre),
- un élément de calcul de paramètres orbitaux connecté à la sortie de l'élément de calcul de position et adapté à déterminer le vecteur d'état E du satellite, composé des paramètres orbitaux, selon la formule :

  $$Z = H.E + C.B$$

- un élément auxiliaire de calcul de biais connecté à la sortie de l'élément de calcul de position, à une unité de télémétrie en liaison avec le sol, et dont la sortie est connectée à l'élément de calcul de paramètres orbitaux, adapté à déterminer et mémoriser le vecteur biais B par comparaison du vecteur E avec des mesures correspondantes venues du sol, et
- une unité de commande reliée à des tuyères de maintien à poste.

Selon des dispositions préférées :

- une unité de détermination d'attitude est connectée aux sorties des détecteurs terrestre, solaires et stellaire et à la sortie de l'élément de calcul de paramètres orbitaux.
- l'élément de calcul de paramètres orbitaux est un filtre KALMAN.
- l'élément auxiliaire de calcul de biais est un filtre FRIEDLAND.

Des objets, caractéristiques et avantages de l'invention ressortent de la description qui suit, donnée à titre d'exemple d'illustration non limitatif, en regard des dessins annexés sur lesquels :

- la figure 1 est une vue schématique d'un satellite équipé d'un système de contrôle d'orbite autonome conforme à l'invention ;
- la figure 2 est un schéma simplifié de ce système de contrôle d'orbite géostationnaire autonome ; et
- la figure 3 est la simulation sur un an de la trace d'un tel satellite.

La figure 1 représente de façon schématique un satellite 1 décrivant une orbite 2 autour de la Terre.

De façon classique, au satellite 1 est associé un repère de référence X Y Z dont l'axe X est tangent à l'orbite 2, et orienté dans le sens dans lequel l'orbite est parcourue (d'Ouest en Est), et l'axe Z est dirigé vers la Terre (axe géocentrique).

Le satellite comporte une plate-forme portant des panneaux solaires 3, des réflecteurs 4 et des tuyères de propulsion de tout type connu approprié.

De façon également connue la plate-forme de ce satellite comporte au moins un capteur terrestre orienté vers la Terre et schématisé en $T_1$ ainsi qu'une pluralité de détecteurs solaires répartis dans un plan parallèle au plan des axes X et Z et adaptés à être successivement en regard du Soleil au fur et à mesure que le satellite décrit son orbite. Différentes configurations sont connues ; à titre d'exemple, les détecteurs solaires sont ici au nombre de trois : $S_1$, $S_2$, $S_3$, disposés l'un $S_2$ sur la face tournée vers la Terre et les deux autres, $S_1$ et $S_3$, sur les arêtes opposées à cette face.

Selon l'invention, la plate-forme de ce satellite est également munie, ici sur sa face Nord (à l'opposé de l'axe Y) d'un détecteur stellaire P, de tout type connu approprié, orienté vers le nord, selon l'axe Sud-Nord. Il s'agit par exemple d'un détecteur choisi dans la gamme SODERN ou GALILEO.

Ainsi qu'on le sait, il existe actuellement des différences importantes entre les trois types précités de détecteurs, même s'ils sont tous des détecteurs optiques.

Tout d'abord les détecteurs solaires $S_1$ à $S_3$, terrestre $T_1$ et stellaire P se classent respectivement par ordre décroissant du point de vue puissance de rayonnement incident.

En outre ces détecteurs connus sont sensibles à des gammes différentes de rayonnement : les détecteurs terrestres sont sensibles au rayonnement infra-rouge de la Terre, les détecteurs solaires sont formés de cellules photo-électriques et les détecteurs stellaires sont à base de barrettes ou de réseaux CCD (en anglais "Charge Coupled Device").

Enfin, ces détecteurs comportent classiquement des filtres intégrés induisant des retards différents.

L'invention utilise la particularité qu'a l'Etoile Polaire d'être la seule étoile de sa magnitude à être toujours dans le champ de vision d'un détecteur stellaire monté sur la face Nord d'un satellite, et donc sa reconnaissance n'exige pas de logiciel sophistiqué.

Les détecteurs terrestre $T_1$, solaires $S_1$ à $S_3$ et stellaire P permettent à tout instant de relever l'orientation angulaire de la Terre, du Soleil et de l'Etoile Polaire, respectivement, dans le repère lié au satellite.

La figure 2 illustre la structure du système autonome de contrôle d'orbite géostationnaire.

Aux détecteurs $T_1$, $S_1$ à $S_3$ et P sont associés des éléments parallèles de filtrage 10, 11 et 12, dans un dispositif de filtrage et de synchronisation dont les sorties sont connectées à un élément de calcul de position 13 suivi d'un élément de calcul de paramètres orbitaux 14 auquel est associé un élément auxiliaire de calibration 15, également connecté à l'élément de calcul de position 13 et relié à une unité de télémétrie 16 en liaison avec le sol. La sortie de l'élément de calcul de paramètres orbitaux est connectée à une unité de calcul et de commande 17 sous le contrôle de laquelle sont placées les tuyères de maintien à poste 18. Une unité de détermination d'attitude 19 est connectée à la fois aux sorties non filtrées des détecteurs $T_1$, $S_1$ à $S_3$ et P et à la sortie de l'élément de calcul des paramètres orbitaux 14. En pratique une mémoire 20 est associée à l'élément de calcul 14 pour stocker les paramètres orbitaux calculés par cet élément 14.

En pratique les éléments de calculs 13, 14, 15, 17, 18 peuvent être intégrés au calculateur de bord du satellite.

Conformément à l'invention, on choisit de caractériser la position du satellite dans l'espace par la mesure, au même instant, des écarts angulaires $\alpha_1$ et $\alpha_2$, existant respectivement, vus du satellite, d'une part entre le Soleil et la Terre, d'autre part entre l'Etoile Polaire et la Terre.

Les modalités de calcul de ces angles $\alpha_1$ et $\alpha_2$ accomplies par l'élément de calcul 13, sont à la portée de l'homme de métier.

Les grandes lignes de ces calculs peuvent se résumer comme suit, en désignant par $R_T$, $R_S$ et $R_P$ des repères liés respectivement au détecteur terrestre, aux détecteurs solaires et au détecteur stellaire. On sait définir des matrices de passage $P_S$ et $P_P$ pour passer des repères $R_S$ et $R_P$ au repère $R_T$. La mesure des détecteurs solaires et stellaire est constituée par un vecteur unitaire $\vec{x_s}$ ou $\vec{x_p}$ dirigé du satellite vers le Soleil ou l'Etoile Polaire.

Chacun de ces vecteurs peut s'écrire dans le repère $R_T$ :

$$\vec{X_S} = P_S^{-1} . \vec{x_S}$$
$$\vec{X_P} = P_P^{-1} . \vec{x_P}$$

et les angles de navigation $\alpha_1$ et $\alpha_2$ se déduisent par :

$$\cos \alpha_1 = \vec{X_S} . \vec{X_T}$$
$$\cos \alpha_2 = \vec{X_P} . \vec{X_T}$$

En pratique, pour ramener les mesures des angles $\alpha_1$ et $\alpha_2$ exactement au même instant, l'invention propose dans un premier temps, en 10, 11 et 12, de filtrer différemment les mesures brutes des divers détecteurs de manière, non seulement à obtenir un niveau de bruit résiduel prédéterminé approprié, mais aussi à ajouter un retard, différent d'un détecteur à l'autre, tel que le retard global associé à chaque détecteur (ou groupe de détecteurs de même nature), c'est-à-dire la somme du retard propre à chaque détecteur et du retard additionnel induit par le filtre associé 10, 11 ou 12, soit le même pour toutes les mesures. Il en résulte une synchronisation des mesures qui élimine l'influence sur ces mesures de l'attitude qui, elle, est sujette à des variations parfois très rapides.

Le retard global est par exemple choisi égal à 10 secondes.

Il est donc possible de ne traiter en 13 un couple d'angles de navigation qu'avec une périodicité modérée, typiquement toutes les dix minutes, ce qui ne représente pas une surcharge significative pour la calculateur de bord.

Soit Z un vecteur de mesure constitué à partir des angles de navigation $\alpha_1$ et $\alpha_2$.

L'élément de calcul 14 est adapté à déduire le vecteur d'état E regroupant les paramètres orbitaux, selon une formule du type :

$$Z = H.E. + C.B$$

où

H est une matrice de mesure

B est un vecteur biais

et C est une matrice de sensibilité aux biais du type :

$$C = \begin{pmatrix} X_S & Y_S & 0 \\ 0 & 0 & Y_P \end{pmatrix}$$

avec

$X_S$ étant un terme de période voisine de la journée,

$Y_S$ étant un terme de période voisine de l'année,

$Y_P$ étant un terme de période voisine du mouvement apparent de l'Etoile Polaire.

La détermination des composantes de la matrice de mesure H est de la compétence de l'homme de métier compte tenu des définitions choisies pour les vecteurs Z et E.

Il en est de même des composantes de la matrice C.

Dans l'exemple qui suit, on a choisi pour les vecteurs Z et E des définitions légèrement différentes de celles données ci-dessus :

- $Z = (\cos x_1 - \cos x_{1syn}, x_2 - x_{2syn})^T$

où l'indice "syn" est associé à la valeur du paramètre $x_1$ ou $x_2$ pour le satellite supposé en orbite géosynchrone idéale non perturbée

et où l'indice "T" traduit une transposition de vecteur ou de matrice ;

- $E = (\eta, \xi, e_x, e_y, i_x, i_y)^T$

où

$\eta = a - a_{syn}$ $\xi = \Omega + \omega + M - l_m$

$e_x = e.\cos(\Omega + w)$ $e_y = e.\sin(\Omega + \omega)$

$i_x = i.\cos\Omega$ $i_y = i.\sin\Omega$
avec M étant l'anomalie moyenne ;
- la matrice H s'écrit alors

$$\frac{H_1}{H_2}$$

$$H_1 = [\,0, x_1.\sin l - y_1.\cos l, (1-\cos 2l).x_1 - \sin 2l.y_1, -x_1.\sin 2l + (1+\cos 2l).y_1, -z_1.\sin l, z_1.\cos l\,]$$

et

$$H_2 = \frac{1}{\sin X_{2syn}} \cdot [\,0, x_2.\sin l - y_2.\cos l, (1-\cos 2l).x_2 - \sin 2l.y_2, -x_2.\sin 2l + (1+\cos 2l).y2, -z_2.\sin l, z_2.\cos l\,]$$

où $l = l_m$ (longitude de stationnement) + (temps sidéral).
où $(x_1, y_1, z_1)$ est le vecteur unitaire (Centre Terre-Soleil) et
où $(x_2, y_2, z_2)$ est le vecteur unitaire (Centre Terre-Polaire).

Quant aux paramètres $X_S$, $Y_S$ et $Y_p$de la matrice C, ils correspondent aux coordonnées de ces mêmes vecteurs unitaires si, en changeant la notation précitée, on écrit ces coordonnées ($X_S$, $Y_S$, $Z_S$) pour le Soleil et ($X_p$, $Y_p$, $Z_p$) pour la Polaire.

Comme cela a été déjà précisé, la forme de H dépend de la forme précise choisie pour Z et E.

Le vecteur biais B a pour objet de rendre compte des erreurs internes et des erreurs d'alignement des détecteurs.

Même si ces erreurs étaient soigneusement calibrées au sol, l'environnement et le déroulement du lancement seraient susceptibles de les modifier.

D'autre part, leur calibration en vol, individuellement, est actuellement reconnue comme impossible car ces biais ou écarts ne sont pas observables.

Il a été cependant constaté, dans le cadre de l'invention, qu'il était possible d'évaluer globalement l'effet de tous ces biais sur les deux angles de navigation grâce à une matrice de sensibilité aux biais du type précité.

Selon l'invention la procédure de calibration de ces biais est la suivante : le sol détermine régulièrement (par exemple après la mise en orbite puis tous les ans) la position du satellite et ses paramètres orbitaux puis télécharge à ce dernier, grâce à l'unité de télémétrie 16, ces paramètres d'orbite et/ou les angles de navigation associés. Les paramètres sont alors traités, de même que la valeur Z déduite des mesures des détecteurs, par l'élément auxiliaire de calcul 15 qui en déduit la nouvelle valeur du vecteur biais B. Le vecteur biais, une fois estimé à l'issue d'une période d'une dizaine de jours, est stocké dans cet élément 15 jusqu'à la prochaine calibration. La fonction calcul de cet élément 15 peut alors être désactivée pour ne pas solliciter inutilement le calculateur de bord.

L'élément de calcul 14 est en fait un filtre estimateur d'orbite ; il s'agit par exemple d'un filtre KALMAN, dont les équations sont bien connues de l'homme de métier.

L'élément auxiliaire de calcul 15 est en pratique un filtre, par exemple du type FRIEDLAND dont les équations sont également connues. Elles permettent d'évaluer B à partir de plusieurs mesures.

Des simulations effectuées sur un an ont permis de vérifier qu'il était possible de maintenir ainsi un satellite dans une fenêtre de 0,05 degré, aussi bien en longitude qu'en latitude (voir la figure 3) avec pour les paramètres orbitaux, la précision suivante (trois fois l'écart-type) :
sur a : 50 m
sur $e_x$ : 3,5 $10^{-5}$
sur $e_y$ : $3{,}5.10^{-5}$
sur $i_x$ et $i_y$ : 0,001 degré
sur la longitude : 0,005 degré.

Les mesures brutes des détecteurs (avant filtrage, donc correspondant à des instants légèrement différents) peuvent être utilisées pour, grâce à l'élément 18, déterminer les trois angles d'attitude du satellite (roulis, lacet, tangage) à partir de la connaissance des paramètres orbitaux fournis par l'élément 14,

donc de façon autonome (les constantes de temps des filtres intétgrés aux détecteurs sont couramment environ de quelques dixièmes de seconde pour les détecteurs solaires, de 0,5 seconde pour le détecteur terrestres, et de 0,1 à 0,5 seconde pour le détecteur stellaire).

Le système de la figure 2 constitue donc une système entièrement autonome de détermination aussi bien de l'orbite que de l'attitude.

**Revendications**

**1.** Procédé pour le maintien à poste d'un satellite en orbite géostationnaire, caractérisé en ce que :

- on détermine au même instant l'angle $\alpha_1$ entre la direction Satellite-Soleil et la direction Satellite-Terre), et l'angle $\alpha_2$ entre la direction Satellite-Etoile Polaire et la direction Satellite-Terre ,
- on en déduit le vecteur d'état E formé des paramètres orbitaux par la formule :

$$Z = H.E + C.B$$

où :

. Z est un vecteur de mesure dont les composantes sont déduites des angles $\alpha_1$ et $\alpha_2$
. H est une matrice de mesure
. C est une matrice de sensibilité aux biais de forme

$$\begin{pmatrix} X_S & Y_S & 0 \\ 0 & 0 & Y_P \end{pmatrix}$$

où $X_S$ est un terme de période sensiblement égale à la journée, $Y_S$ est une terme de période sensiblement égale à l'année et $Y_p$ est un terme caractéristique du mouvement de l'Etoile Polaire,
. B est un vecteur biais déterminé préalablement par comparaison entre le vecteur Z mesuré et des mesures faites au sol,

- on détermine en conséquence et on applique par des tuyères des manoeuvres de maintien à poste.

**2.** Procédé selon la revendication 1, caractérisé en ce que l'on détermine les angles $\alpha_1$ et $\alpha_2$ à partir de mesures effectuées par au moins un détecteur terrestre ($T_1$), une pluralité de détecteurs solaires ($S_1$, $S_2$, $S_3$) et un détecteur stellaire (P) orienté vers le Nord selon l'axe Sud-Nord du satellite, les mesures de ces détecteurs étant filtrées (10, 11, 12) séparément en sorte d'obtenir pour ces mesures un retard global (retard intrinsèque du détecteur + retard de filtrage) identique.

**3.** Système de maintien à poste comportant :

- au moins un détecteur terrestre ($T_1$) muni d'un filtre (10) adapté à générer un retard tel que le retard global (retard propre du détecteur + retard du filtre) ait une valeur prédéterminée,
- une pluralité de détecteurs solaires ($S_1$, $S_2$, $S_3$) munie d'un filtre (11) adapté à générer un retard tel que le retard global soit égal à ladite valeur prédéterminée,
- au moins un détecteur stellaire (P) orienté vers le Nord selon l'axe Sud-Nord du satellite muni d'un filtre (12) adapté à générer un retard tel que le retard global soit égal à ladite valeur prédéterminée,
- un élément de calcul de position (13) connecté à ces filtres et adapté à déduire des mesures filtrées desdits détecteurs ($T_1$, $S_1$-$S_3$, P) l'angle $\alpha_1$ entre les directions Satellite-Soleil et Satellite-Terre et l'angle $\alpha_2$ entre les directions Satellite-Etoile Polaire et Satellite-Terre,
- un élément (14) de calcul de paramètres orbitaux connecté à la sortie de l'élément de calcul de position (13) et adapté à déterminer le vecteur d'état E du satellite, composé des paramètres orbitaux selon la formule :

$$Z = H.E + C.B$$

où :

. Z est un vecteur de mesure dont les composantes sont déduites des angles $\alpha_1$ et $\alpha_2$
. H est une matrice de mesure
. C est une matrice de sensibilité aux biais de forme

$$\begin{pmatrix} X_S & Y_S & 0 \\ 0 & 0 & Y_p \end{pmatrix}$$

où $X_S$ est un terme de période sensiblement égale à la journée, $Y_z$ est un terme de période sensiblement égale à l'année et $Y_p$ est un terme caractéristique du mouvement de l'Etoile Polaire,
. B est un vecteur biais déterminé préalablement par comparaison entre le vecteur Z mesuré et des mesures faites au sol,

- un élément auxiliaire de calcul de biais (15) connecté à la sortie de l'élément de calcul de position (13), à une unité de télémétrie (16) en liaison avec le sol, et dont la sortie est connectée à l'élément de calcul de paramètres orbitaux, adapté à déterminer et mémoriser le vecteur biais B par comparaison du vecteur E avec des mesures correspondantes venues du sol, et
- une unité de commande (17) reliée à des tuyères de maintien à poste.

**4.** Système selon la revendication 3, caractérisé en ce qu'une unité de détermination d'attitude (19) est connectée aux sorties des détecteurs terrestre, solaires et stellaire et à la sortie de l'élément de calcul de paramètres orbitaux (14).

**5.** Système selon la revendication 3 ou la revendication 4, caractérisé en ce que l'élément (14) de calcul de paramètres orbitaux est un filtre KALMAN.

**6.** Système selon l'une quelconque des revendications 3 à 5, caractérisé en ce que l'élément auxiliaire de calcul de biais (15) est un filtre FRIEDLAND.

**Claims**

**1.** Method for keeping a satellite in station in a geostationary orbit, characterized in that:

- the angle $\alpha_1$ between the satellite-Sun direction and the satellite-Earth direction, and the angle $\alpha_2$ between the satellite-Pole Star direction and the satellite-Earth direction are determined at the same time,
- the state vector E formed by the orbital parameters is derived therefrom by means of the formula:

$$Z = H.E + C.B$$

where:

. Z is a measurement vector, the components of which are derived from the angles $\alpha_1$ and $\alpha_2$
. H is a measuring matrix
. C is a bias-sensitivity matrix of the form

$$\begin{pmatrix} X_S & Y_S & 0 \\ 0 & 0 & Y_P \end{pmatrix}$$

where $X_S$ is a term for a period approximately equal to one day, $Y_S$ is a term for a period approximately equal to one year and $Y_p$ is a term characteristic of the movement of the Pole Star,

. B is a bias vector determined beforehand by means of a comparison between the measured vector Z and measurements made on the ground,

- station-keeping manoeuvres are determined accordingly and applied by means of thrusters.

**2.** Method according to Claim 1, characterised in that the angles $\alpha_1$ and $\alpha_2$ are determined from measurements made by at least one terrestrial sensor ($T_1$), a plurality of solar sensors ($S_1$, $S_2$, $S_3$) and a stellar sensor (P) oriented towards the North along the South-North axis of the satellite, the measurements from these sensors being filtered (10, 11, 12) separately so as to obtain for these measurements an identical overall time-delay (intrinsic time-delay of the sensor + filtering time delay).

**3.** Station-keeping system including:

- at least one terrestrial detector ($T_1$) provided with a filter (10) adapted for generating a time-delay such that the overall time delay (intrinsic time-delay of the detector + filter time-delay) has a predetermined value,
- a plurality of solar detectors ($S_1$, $S_2$, $S_3$) provided with a filter (11) adapted for generating a time-delay such that the overall time-delay is equal to the said predetermined value,
- at least one stellar sensor (P) oriented towards the North along the South-North axis of the satellite, provided with a filter (12) adapted for generating a time-delay such that the overall time-delay is equal to the said predetermined value,
- a position-computation unit (13) connected to these filters and adapted for deriving, from the filtered measurements from the said sensors ($T_1$, $S_1$-$S_3$, P), the angle $\alpha_1$ between the satellite-Sun and satellite-Earth directions and the angle $\alpha_2$ between the satellite-Pole Star and satellite-Earth directions,
- an orbital parameter computation unit (14) connected to the output from the position-computation unit (13) and adapted for determining the state vector E of the satellite, made up of the orbital parameters according to the formula:

$$Z = H.E + C.B$$

where:

. Z is a measurement vector, the components of which are derived from the angles $\alpha_1$ and $\alpha_2$

. H is a measuring matrix

. C is a bias-sensitivity matrix of the form

$$\begin{pmatrix} X_S & Y_S & 0 \\ 0 & 0 & Y_P \end{pmatrix}$$

where $X_S$ is a term for a period approximately equal to one day, $Y_S$ is a term for a period approximately equal to one year and $Y_P$ is a term characteristic of the movement of the Pole Star,

. B is a bias vector determined beforehand by means of a comparison between the measured vector Z and measurements made on the ground,

- an auxiliary bias-computation unit (15) connected to the output from the position-computation unit (13) and to a telemetry unit (16) in communication with the ground and the output of which is connected to the orbital parameter computation unit, adapted for determining and storing the bias vector B by comparing the vector E with corresponding measurements from the ground, and
- a control unit (17) connected to station-keeping thrusters.

**4.** System according to Claim 3, characterised in that an attitude-determination unit (19) is connected to the outputs from the terrestrial, solar and stellar sensors and to the output from the orbital parameter computation unit (14).

**5.** System according to Claim 3 or Claim 4, characterised in that the orbital parameter computation unit (14) is a KALMAN filter.

**6.** System according to any one of Claims 3 to 5, characterised in that the auxiliary bias-computation unit (15) is a FRIEDLAND filter.

## Patentansprüche

**1.** Verfahren zur Positionsbeibehaltung eines Satelliten auf einem geostationären Orbit, dadurch gekennzeichnet, daß
- zum selben Zeitpunkt der Winkel $\alpha_1$ zwischen der Richtung Satellit-Sonne und der Richtung Satellit-Erde und der Winkel $\alpha_2$ zwischen der Richtung Satellit-Polarstern und der Richtung Satellit-Erde bestimmt werden,
- daraus der von den Orbitalparametern gebildete Zustandsvektor E durch die Formel abgeleitet wird:

$$Z = H.E + C.B$$

in der:
. Z ein Meßvektor ist, dessen Komponenten von den Winkeln $\alpha_1$ und $\alpha_2$ abgeleitet sind,
. H eine Meßmatrix ist,
. C eine Matrix der Empfindlichkeit für die Abweichungen der Form

$$\begin{pmatrix} X_S & Y_S & 0 \\ 0 & 0 & Y_P \end{pmatrix}$$

ist, worin $X_S$ ein Zeitglied von im wesentlichen gleich einem Tag, $Y_S$ ein Zeitglied von im wesentlichen gleich einem Jahr und $Y_P$ ein für die Bewegung des Polarsterns charakteristisches Zeitglied ist,
. B ein Abweichungsvektor ist, der zuvor durch Vergleich zwischen dem gemessenen Vektor Z und am Boden durchgeführten Messungen bestimmt wurde,
- Positionsbeibehaltungsmanöver entsprechend bestimmt werden und durch Düsen angelegt werden.

**2.** Verfahren nach Anspruch 1, dadurch gekennzeichnet, daß die Winkel $\alpha_1$ und $\alpha_2$ ausgehend von Messungen bestimmt werden, die von wenigstens einem Erdsensor ($T_1$), einer Vielzahl von Solarsensoren ($S_1$, $S_2$, $S_3$) und einem in der Süd-Nord-Achse des Satelliten nach Norden gerichteten Stellarsensor (P) durchgeführt werden, wobei die Messungen dieser Sensoren getrennt gefiltert werden (10, 11, 12), so daß man bei diesen Messungen die gleiche Gesamtverzögerung (Eigenverzögerung des Sensors + Filtrierverzögerung) erhält.

**3.** System zur Positionsbeibehaltung, umfassend:
- wenigstens einen Erdsensor ($T_1$), der mit einem Filter (10) versehen ist, der eine solche Verzögerung erzeugen kann, daß die Gesamtverzögerung (Eigenverzögerung des Sensors + Verzögerung des Filters) einen vorbestimmten Wert hat,
- eine Vielzahl von Solarsensoren ($S_1$, $S_2$, $S_3$), die mit einem Filter versehen sind, der eine solche Verzögerung erzeugen kann, daß die Gesamtverzögerung gleich diesem vorbestimmten Wert ist,
- wenigstens einen in der Süd-Nord-Achse des Satelliten nach Norden gerichteten Stellarsensor (P), der mit einem Filter (12) versehen ist, der eine solche Verzögerung erzeugen kann, daß die Gesamtverzögerung gleich diesem vorbestimmten Wert ist,
- ein Positionsberechnungselement (13), das an diese Filter angeschlossen ist und von den gefilterten Messungen dieser Sensoren ($T_1$, $S_1$-$S_3$, P) den Winkel $\alpha_1$ zwischen den Richtungen Satellit-Sonne und Satellit-Erde und den Winkel $\alpha_2$ zwischen den Richtungen Satellit-Polarstern und Satellit-Erde ableiten kann,
- ein Element (14) zur Berechnung von Orbitalparametern, das an den Ausgang des Positionsberechnungselements (13) angeschlossen ist und den Zustandsvektor E des Satelliten bestimmen kann, der von den Orbitalparametern gemäß der Formel gebildet ist:

$$Z = H.E + C.B$$

in der:

. Z ein Meßvektor ist, dessen Komponenten von den Winkeln $\alpha_1$ und $\alpha_2$ abgeleitet sind,

. H eine Meßmatrix ist,

. C eine Matrix der Empfindlichkeit für die Abweichungen der Form

$$\begin{pmatrix} X_S & Y_S & O \\ O & O & Y_P \end{pmatrix}$$

ist, worin $X_S$ ein Zeitglied von im wesentlichen gleich einem Tag, $Y_S$ ein Zeitglied von im wesentlichen gleich einem Jahr und $Y_P$ ein für die Bewegung des Polarsterns charakteristisches Zeitglied ist,

. B ein Abweichungsvektor ist, der zuvor durch Vergleich zwischen dem gemessenen Vektor Z und am Boden durchgeführten Messungen bestimmt wurde,

- ein Zusatzelement (15) zur Berechnung von Abweichungen, das an den Ausgang des Positionsberechnungselements (13) und an eine mit dem Boden verbundene Telemetrieeinheit (16) angeschlossen ist, deren Ausgang an das Element zur Berechnung von Orbitalparametern angeschlossen ist und das den Abweichungsvektor B durch Vergleich des Vektors E mit entsprechenden, vom Boden kommenden Messungen bestimmen und speichern kann, und
- eine mit Positionsbeibehaltungsdüsen verbundene Steuereinheit (17).

**4.** System nach Anspruch 3, dadurch gekennzeichnet, daß eine Lagebestimmungseinheit (19) an die Ausgänge der Erd-, Solar- und Stellarsensoren und an den Ausgang des Elements (14) zur Berechnung von Orbitalparametern angeschlossen ist.

**5.** System nach Anspruch 3 oder 4, dadurch gekennzeichnet, daß das Element (14) zur Berechnung von Orbitalparametern ein KALMAN-Filter ist.

**6.** System nach einem der Ansprüche 3 bis 5, dadurch gekennzeichnet, daß das Zusatzelement (15) zur Berechnung von Abweichungen ein FRIEDLAND-Filter ist.

FIG.1

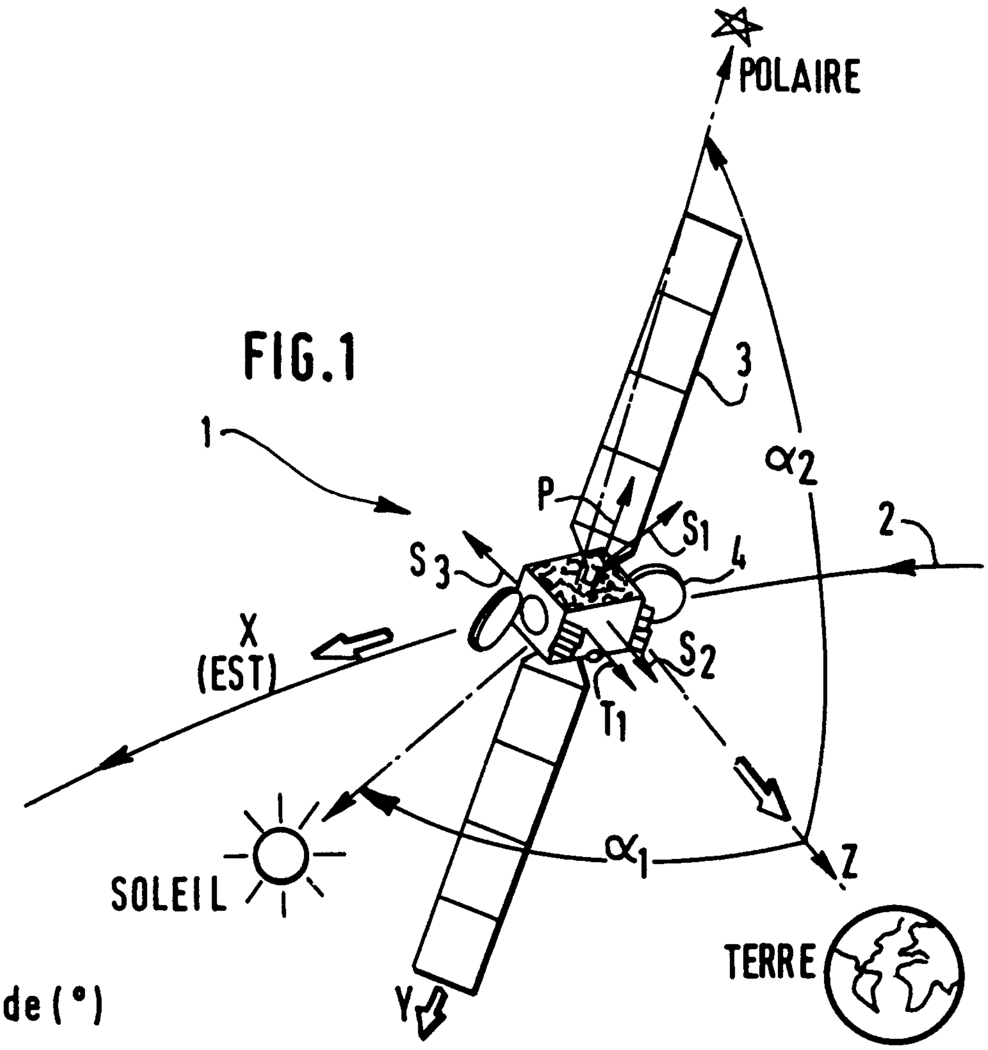
POLAIRE
3
1
α2
P
S1
2
S3
4
X
(EST)
S2
T1
SOLEIL
α1
Z
TERRE
Y

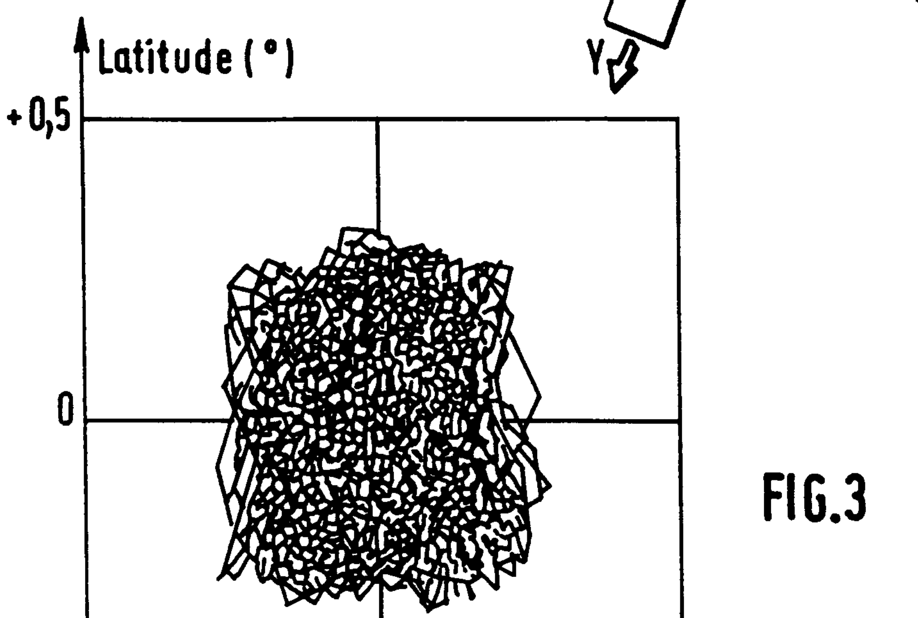
Latitude (°)
+0,5
0
-0,5
-0,5
0
+0,5
Longitude (°)

FIG.3

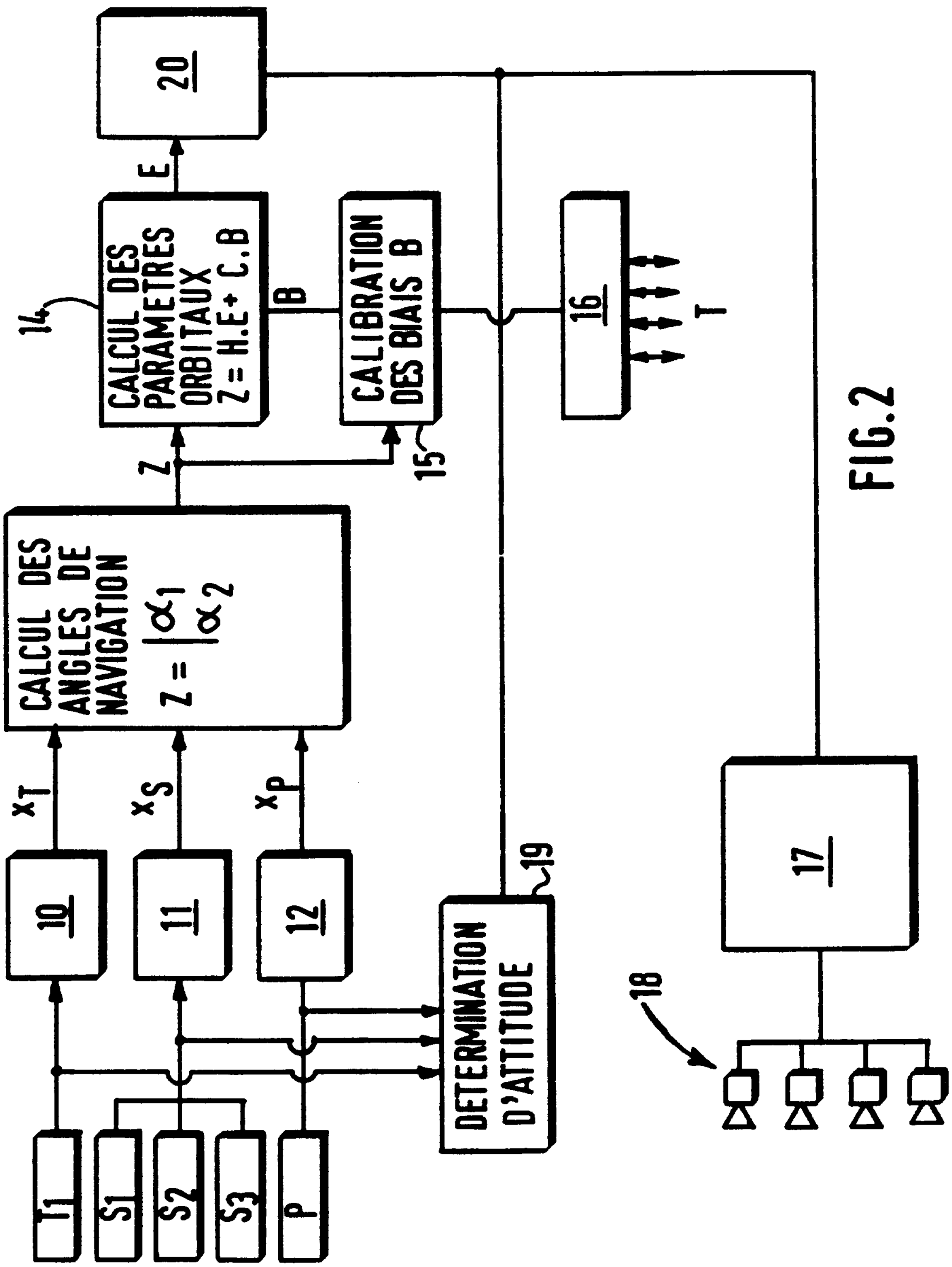
T1
S1
S2
S3
P
10
11
12
$x_T$
$x_S$
$x_P$
CALCUL DES ANGLES DE NAVIGATION
$Z = \left| \begin{matrix} \alpha_1 \\ \alpha_2 \end{matrix} \right.$
Z
CALCUL DES PARAMETRES ORBITAUX
Z= H.E+ C.B
14
E
20
B
CALIBRATION DES BIAIS B
15
16
T
DETERMINATION D'ATTITUDE
19
17
18

FIG.2